(19) Europäisches Patentamt
European Patent Office
Office européen des brevets

(11) **EP 3 684 008 A1**

(12) **EUROPEAN PATENT APPLICATION**
published in accordance with Art. 153(4) EPC

(43) Date of publication:
**22.07.2020 Bulletin 2020/30**

(21) Application number: **18861438.2**

(22) Date of filing: **13.07.2018**

(51) Int Cl.:
**H04L 12/10** (2006.01)     **G05F 1/56** (2006.01)

(86) International application number:
**PCT/CN2018/095536**

(87) International publication number:
**WO 2019/062282 (04.04.2019 Gazette 2019/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2017 CN 201710938839**

(71) Applicant: **Huawei Technologies Co., Ltd.**
**Longgang District**
**Shenzhen, Guangdong 518129 (CN)**

(72) Inventors:
• **FU, Shiyong**
  **Shenzhen**
  **Guangdong 518129 (CN)**

• **ZHUANG, Yan**
  **Shenzhen**
  **Guangdong 518129 (CN)**
• **XU, Xiangen**
  **Shenzhen**
  **Guangdong 518129 (CN)**
• **DONG, Qi**
  **Shenzhen**
  **Guangdong 518129 (CN)**
• **XU, Peng**
  **Shenzhen**
  **Guangdong 518129 (CN)**
• **HUA, Rui**
  **Shenzhen**
  **Guangdong 518129 (CN)**

(74) Representative: **Gill Jennings & Every LLP**
**MTH**
**The Broadgate Tower**
**20 Primrose Street**
**London EC2A 2ES (GB)**

(54) **ENERGY-SAVING POWER SOURCING METHOD, POWER SOURCING EQUIPMENT, AND POWERED DEVICE**

(57)     This application discloses an energy-saving power sourcing method. Power sourcing equipment receives an input voltage of a powered device fed back by the powered device, and adjusts, based on the input voltage, a power sourcing voltage that is output to the powered device, so that the input voltage of the powered device is a maximum voltage, thereby reducing a link loss and saving electric power resources of the power sourcing equipment.

```
┌─────────────────────────────────────────────────────┐
│ Power sourcing equipment 100 outputs a power         │
│ sourcing voltage to a power sourcing port 103 of the │──── 701
│ power sourcing equipment 100, so as to supply power  │
│ to a powered device 200                              │
└─────────────────────────────────────────────────────┘
                          │
                          ▼
┌─────────────────────────────────────────────────────┐
│ The powered device 200 feeds back an input voltage   │──── 702
│ of the powered device 200 to the power sourcing      │
│ equipment 100                                        │
└─────────────────────────────────────────────────────┘
                          │
                          ▼
┌─────────────────────────────────────────────────────┐
│ The power sourcing equipment 100 adjusts an output   │
│ power sourcing voltage based on the input voltage of │──── 703
│ the powered device 200 until the input voltage of    │
│ the powered device 200 is a maximum voltage          │
└─────────────────────────────────────────────────────┘
```

FIG. 7

EP 3 684 008 A1

**Description**

**TECHNICAL FIELD**

The present invention relates to the communications field, and in particular, to an energy-saving power sourcing method, power sourcing equipment, and a powered device.

**BACKGROUND**

Power over Ethernet (Power over Ethernet, PoE) is a technology of transmitting Ethernet data and electric power by using an Ethernet cable (also referred to as an Ethernet twisted pair). As defined in a PoE standard formulated by the Institute of Electrical and Electronics Engineers (Institute of Electrical and Electronic Engineers, IEEE), a PoE device includes power sourcing equipment (power sourcing equipment, PSE) and a powered device (powered device, PD). The PSE is a device that provides electric power. The PD is a device that extracts electric power. The PoE technology allows the PSE to couple the data and the electric power and transmit the data and the electric power to the powered device through the Ethernet cable, or to separate the data from the electric power and transmit either of the data and the electric power to the powered device through the Ethernet cable.

In a power supply process, because of a link loss from the PSE to the PD, power that is output by the PSE is usually greater than power consumed by the PD, thereby causing a waste of electric power energy.

**SUMMARY**

This application provides an energy-saving power sourcing method, power sourcing equipment, and a powered device. The power sourcing equipment may adjust an output power sourcing voltage in real time, so as to ensure that an input voltage of the powered device is a maximum voltage specified in a standard. In this way, a current of power supply can be reduced, so that a link loss from the power sourcing equipment to the powered device can be reduced, and electric power energy of the power sourcing equipment can be saved.

According to a first aspect, power sourcing equipment is provided, including a power sourcing port, a power sourcing chip, and a voltage comparison circuit, where the power sourcing chip is connected to the power sourcing port; and the voltage comparison circuit is separately connected to the power sourcing port and the power sourcing chip;

the power sourcing chip is configured to output a power sourcing voltage to the power sourcing port, so as to supply power to a powered device, where the powered device is connected to the power sourcing port by using a cable;

the voltage comparison circuit is configured to: obtain a feedback voltage from the power sourcing port, compare the feedback voltage with a reference voltage, and output a comparison result, where the feedback voltage corresponds to an input voltage of the powered device based on a voltage correspondence; and

the power sourcing chip is further configured to adjust, based on the comparison result and according to a preset adjustment policy, a power sourcing voltage that is output to the power sourcing port until the input voltage of the powered device is a maximum voltage.

The foregoing power sourcing equipment may obtain the input voltage of the powered device in real time by using the voltage comparison circuit, and adjust the output power sourcing voltage in real time, so that the input voltage of the powered device remains at the maximum voltage. In this way, a current on a link from the power sourcing equipment to the powered device can be minimized more quickly and accurately, thereby reducing a link loss and saving electric power energy of the power sourcing equipment.

With reference to the first aspect, in a first possible implementation of the first aspect, the voltage comparison circuit is specifically configured to obtain the feedback voltage from an idle wire pair of the cable, and the idle wire pair is a wire pair that is in the cable and that is not used for power supply.

The input voltage of the powered device can be obtained in real time by using the idle wire pair, so that voltage adjustment efficiency can be improved.

With reference to the first aspect or the first possible implementation of the first aspect, in a second possible implementation of the first aspect, the comparison result includes a voltage difference, and the voltage difference is a difference between the maximum voltage and the input voltage of the powered device; and the preset adjustment policy is determining a voltage adjustment value based on the voltage difference, and gradually adjusting a power sourcing voltage that is output to the power sourcing port; or the preset adjustment policy is calculating, based on the voltage difference, a target power sourcing voltage of the power sourcing equipment when the input voltage of the powered device is the maximum voltage, and adjusting, based on the target power sourcing voltage, the power sourcing voltage that is output to the power sourcing port.

How to adjust the power sourcing voltage can be more flexibly and accurately determined by using the voltage difference, thereby improving voltage adjustment efficiency and accuracy.

With reference to the second possible implementation of the first aspect, in a third possible implementation of the first aspect, the reference voltage corresponds to the maximum voltage based on the voltage correspondence; and the voltage comparison circuit is specifically configured to convert a difference between the feedback voltage and the reference voltage based on the voltage correspondence, to obtain the voltage difference.

With reference to any one of the first aspect or the first and the second possible implementations of the first aspect, in a fourth possible implementation of the first aspect, the reference voltage is the maximum voltage; and the voltage comparison circuit is specifically configured to: convert the feedback voltage back into the input voltage based on the voltage correspondence, and compare the input voltage with the reference voltage to obtain the comparison result.

According to a second aspect, a powered device is provided, including a power extraction port, a powered chip, and a voltage feedback circuit, where the powered chip is connected to the power extraction port, and the voltage feedback circuit is separately connected to the power extraction port and the powered chip;

the powered chip is configured to extract electric power from power sourcing equipment by using the power extraction port, and the power extraction port is connected to the power sourcing equipment by using a cable; and

the voltage feedback circuit is configured to: obtain an input voltage of the powered chip, and send a feedback voltage corresponding to the input voltage to the power sourcing equipment by using an idle wire pair, so that the power sourcing equipment adjusts, based on the feedback voltage, a power sourcing voltage that is output by the power sourcing equipment until the input voltage of the powered chip is a maximum voltage.

By using hardware, namely, the voltage feedback circuit, the powered device directly feeds back the input voltage to the power sourcing equipment by using the idle wire pair. This can feed back the input voltage of the powered device in real time, so that the power sourcing equipment adjusts the output power sourcing voltage in real time, improving voltage adjustment efficiency.

With reference to the second aspect, in a first possible implementation of the second aspect, the voltage feedback circuit is connected to an input point of the powered chip to obtain the input voltage.

With reference to the second aspect or the first possible implementation of the second aspect, in a second possible implementation of the second aspect, the voltage feedback circuit is specifically configured to output the feedback voltage to an idle wire pair of the cable, and transmit the feedback voltage to the power sourcing equipment.

With reference to any one of the second aspect or the first and the second possible implementations of the second aspect, in a third possible implementation of the second aspect, the feedback voltage corresponds to the input voltage based on a voltage correspondence, and the voltage correspondence includes a proportional relationship or a functional relationship.

According to a third aspect, power sourcing equipment is provided, including a power sourcing port, a processor, and a power sourcing chip.

The processor is connected to the power sourcing chip, for example, by using an inter-integrated circuit (Inter-Integrated Circuit, IIC) bus. The processor is connected to the power sourcing port.

The power sourcing chip is configured to: output a power sourcing voltage to the power sourcing port, so as to supply power to a powered device, where the powered device is connected to the power sourcing port by using a cable; and extract electric power from the power sourcing equipment by using the power sourcing port.

The processor is configured to: obtain an input voltage of the powered device from a link layer packet sent by the powered device, and instruct, based on the input voltage, the power sourcing chip to adjust an output power sourcing voltage.

With reference to the third aspect, in a first possible implementation of the third aspect, the processor is configured to: determine a target power sourcing voltage based on the input voltage, and send a voltage adjustment instruction to the power sourcing chip, where the voltage adjustment instruction includes the target power sourcing voltage, and the voltage adjustment instruction is used to instruct the power sourcing chip to adjust the output power sourcing voltage to the target power sourcing voltage until the input voltage of the powered device is a maximum voltage.

The power sourcing chip is configured to: receive the voltage adjustment instruction sent by the processor, and adjust the output power sourcing voltage to the target power sourcing voltage according to the voltage adjustment instruction.

With reference to the third aspect, in a second possible implementation of the third aspect, the processor compares the input voltage with the maximum voltage to obtain a comparison result, and sends the comparison result to the power sourcing chip.

The power sourcing chip adjusts the output power sourcing voltage based on the comparison result and according to a preset adjustment policy.

According to a fourth aspect, a powered device is provided, including a power extraction port, a processor, and a powered chip.

The processor is connected to the powered chip, for example, by using an IIC bus. The processor is connected to the power extraction port.

The processor is configured to: obtain an input voltage of the powered chip, and feed back the input voltage to power sourcing equipment, so that the power sourcing equipment adjusts an output power sourcing voltage until the input voltage of the powered chip is a maximum voltage.

With reference to the fourth aspect, in a first possible implementation of the fourth aspect, the processor generates a link layer packet, such as an Link Layer Discovery Protocol packet, where the link layer packet includes the input voltage.

With reference to the fourth aspect or the first possible implementation of the fourth aspect, in a second possible implementation of the fourth aspect, the processor periodically obtains the input voltage of the powered chip, generates the link layer packet, and sends the link layer packet to the power sourcing equipment.

With reference to any one of the fourth aspect or the first and the second possible implementations of the fourth aspect, in a third possible implementation of the fourth aspect, when the input voltage of the powered chip changes, the processor immediately generates the link layer packet, and sends the link layer packet to the power sourcing equipment.

According to a fifth aspect, an energy-saving power sourcing method is provided, including:

outputting, by power sourcing equipment, a power sourcing voltage to a power sourcing port of the power sourcing equipment, so as to supply power to a powered device, where the powered device is connected to the power sourcing port;

obtaining, by the power sourcing equipment, an input voltage of the powered device; and

adjusting, by the power sourcing equipment based on the input voltage, a power sourcing voltage that is output by the power sourcing equipment to the power sourcing port until the input voltage of the powered device is a maximum voltage.

According to the foregoing energy-saving power sourcing method, the power sourcing equipment may adjust the output power sourcing voltage based on the input voltage of the powered device, so that the input voltage of the powered device remains at the maximum voltage. In this way, a current on a link from the power sourcing equipment to the powered device can be minimized, thereby reducing a link loss and saving electric power energy of the power sourcing equipment.

With reference to the fifth aspect, in a first possible implementation of the fifth aspect, the obtaining, by the power sourcing equipment, an input voltage of the powered device includes:

obtaining, by the power sourcing equipment, a feedback voltage from an idle wire pair, where the feedback voltage corresponds to the input voltage based on a voltage correspondence, and the idle wire pair is a wire pair that is in a cable used to connect the powered device and the power sourcing equipment and that is not used for power supply; and

the adjusting, by the power sourcing equipment based on the input voltage, a power sourcing voltage that is output by the power sourcing equipment includes:

comparing, by the power sourcing equipment, the feedback voltage with a reference voltage to obtain a comparison result; and

adjusting, based on the comparison result and according to a preset adjustment policy, the power sourcing voltage that is output to the power sourcing port.

By using hardware, the power sourcing equipment can obtain the input voltage of the powered device in real time, and adjust the output power sourcing voltage, so as to quickly complete voltage adjustment, improve voltage adjustment efficiency, and save electric power resources of the power sourcing equipment more quickly.

With reference to the first possible implementation of the fifth aspect, in a second possible implementation of the fifth aspect, the comparing, by the power sourcing equipment, the feedback voltage with a reference voltage includes:

converting the feedback voltage back into the input voltage based on the voltage correspondence, and comparing the input voltage with the reference voltage, where the reference voltage is the maximum voltage; or

comparing the feedback voltage with the reference voltage, where the reference voltage corresponds to the maximum voltage based on the voltage correspondence.

With reference to the fifth aspect, in a third possible implementation of the fifth aspect, the obtaining, by the power sourcing equipment, an input voltage of the powered device includes:

receiving, by the power sourcing equipment, a link layer packet sent by the powered device, where the link layer packet includes the input voltage; and obtaining the input voltage from the link layer packet; and

the adjusting, by the power sourcing equipment based on the input voltage, a power sourcing voltage that is output by the power sourcing equipment to the power sourcing port includes:

comparing the input voltage with the maximum voltage to obtain a comparison result; and
adjusting an output power sourcing voltage based on the comparison result and according to a preset adjustment policy.

By using software, the power sourcing equipment obtains the input voltage of the powered device, and adjusts the output power sourcing voltage. This can reduce hardware changes to the power sourcing equipment and the powered device, improve compatibility, and reduce hardware costs.

With reference to any one of the first to the third possible implementations of the fifth aspect, in a fourth possible implementation of the fifth aspect, the comparison result includes a voltage difference, and the voltage difference is a difference between the maximum voltage and the input voltage; and
the preset adjustment policy is determining a voltage adjustment value based on the voltage difference, and gradually adjusting a power sourcing voltage that is output by the power sourcing equipment to the power sourcing port; or the preset adjustment policy is calculating, based on the voltage difference, a target power sourcing voltage of the power sourcing equipment when the input voltage of the powered device is the maximum voltage, and adjusting, based on the target power sourcing voltage, the power sourcing voltage that is output by the power sourcing equipment to the power sourcing port.

With reference to the fifth aspect, in a fifth possible implementation of the fifth aspect, the obtaining, by the power sourcing equipment, an input voltage of the powered device includes:

receiving, by the power sourcing equipment, a link layer packet sent by the powered device, where the link layer packet includes the input voltage; and obtaining the input voltage from the link layer packet; and
the adjusting, by the power sourcing equipment based on the input voltage, a power sourcing voltage that is output by the power sourcing equipment to the power sourcing port includes:

determining a target power sourcing voltage based on the input voltage; and

adjusting the power sourcing voltage that is output by the power sourcing equipment to the target power sourcing voltage.

According to a sixth aspect, a voltage feedback apparatus is provided, including:

an obtaining module, configured to obtain an input voltage of a powered device; and
a feedback module, configured to feed back the input voltage to power sourcing equipment, so that the power sourcing equipment adjusts, based on the input voltage, an output power sourcing voltage until the input voltage of the powered device is a maximum voltage.

With reference to the sixth aspect, in a first possible implementation of the sixth aspect, the feedback module is configured to output a feedback voltage corresponding to the input voltage to an idle wire pair, and transmit the feedback voltage to the power sourcing equipment, where the idle wire pair is a wire pair that is in a cable used to connect the powered device and the power sourcing equipment and that is not used for power supply, and the feedback voltage corresponds to the input voltage based on a voltage correspondence.

With reference to the sixth aspect, in a second possible implementation of the sixth aspect, the feedback module is configured to: place the input voltage into a link layer packet, and send the link layer packet to the power sourcing equipment.

The input voltage of the powered device is fed back by using software. This can reduce hardware changes to the power sourcing equipment and the powered device, improve compatibility, and reduce hardware costs.

According to a seventh aspect, an energy-saving power sourcing apparatus is provided, including:

an obtaining module, configured to obtain an input voltage of a powered device; and
an adjustment module, configured to adjust, based on the input voltage, a power sourcing voltage that is output by power sourcing equipment until the input voltage of the powered device is a maximum voltage.

With reference to the seventh aspect, in a first possible implementation of the seventh aspect, the obtaining module is configured to obtain a feedback voltage from an idle wire pair, where the feedback voltage corresponds to the input voltage based on a voltage correspondence, and the idle wire pair is a wire pair that is in a cable used to connect the powered device and the power sourcing equipment and that is not used for power supply; and

the adjustment module is configured to: compare the feedback voltage with a reference voltage to obtain a comparison result, and adjust, based on the comparison result and according to a preset adjustment policy, the power sourcing voltage that is output to a power sourcing port.

With reference to the seventh aspect, in a second possible implementation of the seventh aspect, the obtaining module is configured to: receive a link layer packet sent by the powered device, where the link layer packet includes the input voltage; and obtain the input voltage from the link layer packet; and

the adjustment module is configured to: compare the input voltage with the maximum voltage to obtain a comparison result, and adjust an output power sourcing voltage based on the comparison result and according to a preset adjustment policy; or determine a target power sourcing voltage based on the input voltage, and adjust the power sourcing voltage that is output by the power sourcing equipment to the target power sourcing voltage.

According to an eighth aspect, a power supply system is provided, including power sourcing equipment and a powered device.

In a possible implementation, the power sourcing equipment is described according to the first aspect, and the powered device is described according to the second aspect.

In another possible implementation, the power sourcing equipment includes the energy-saving power sourcing apparatus according to the seventh aspect, and the powered device includes the voltage feedback apparatus according to the sixth aspect.

According to a ninth aspect, a computer storage medium is provided, and configured to store a computer program, where the computer program includes an instruction used to perform the energy-saving power sourcing method in the fifth aspect.

According to a tenth aspect, a computer storage medium is provided, and configured to store a computer program, where the computer program includes an instruction used to implement the voltage feedback apparatus in the sixth aspect.

According to an eleventh aspect, a computer storage medium is provided, and configured to store a computer program, where the computer program includes an instruction used to implement the energy-saving power sourcing apparatus in the seventh aspect.

## BRIEF DESCRIPTION OF DRAWINGS

FIG. 1 is a schematic structural diagram of a power supply system according to an embodiment of the present invention;

FIG. 2 is a schematic structural diagram of power sourcing equipment and a powered device according to an embodiment of the present invention;

FIG. 3 is a schematic circuit diagram of a common rectifier bridge according to an embodiment of the present invention;

FIG. 4 is a schematic diagram of supplying power to and adjusting a voltage for a powered device by power sourcing equipment according to an embodiment of the present invention;

FIG. 5 is a schematic circuit diagram of a rectifier bridge and a voltage feedback circuit according to an embodiment of the present invention;

FIG. 6 is another schematic structural diagram of power sourcing equipment and a powered device according to an embodiment of the present invention;

FIG. 7 is a schematic flowchart of an energy-saving power sourcing method according to an embodiment of the present invention;

FIG. 8 is a schematic structural diagram of a voltage feedback apparatus according to an embodiment of the present invention; and

FIG. 9 is a schematic structural diagram of an energy-saving power sourcing apparatus according to an embodiment of the present invention.

## DESCRIPTION OF EMBODIMENTS

The following describes technical solutions provided in this application with reference to the accompanying drawings and specific implementations.

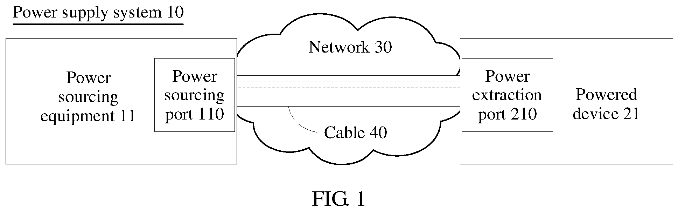

FIG. 1 is a schematic structural diagram of a power supply system according to an embodiment of the present invention. The power supply system 10 includes power sourcing equipment 11 and a powered device 21.

The power supply system 10 is deployed in a network 30 (for example, Ethernet). A power sourcing port 110 of the power sourcing equipment 11 and a power extraction port 210 of the powered device 21 are connected by using a cable 40 (for example, an Ethernet cable). The power sourcing equipment 11 couples data and electric power, and transmits the data and the electric power to the powered device 21 by using the cable 40, so that the power sourcing equipment 11 may supply power to the powered device 21 by using the network 30, and perform data communication with the powered device 21.

Optionally, the network 30 is Ethernet. The power supply system 10 is deployed in the Ethernet, and a PoE technology is used to implement that the power sourcing equipment 11 supplies power to the powered device 21. The power sourcing equipment 11 is PSE, and the powered device 21 is a PD.

The powered device 21 is configured to feed back an input voltage of the powered device 21 to the power sourcing equipment 11.

The power sourcing equipment 11 is configured to adjust, based on the input voltage of the powered device 21, a power sourcing voltage that is output by the power sourcing equipment 11, so that the input voltage of the powered device 21 is a maximum voltage.

In this embodiment of the present invention, an allowed maximum value of the input voltage of the powered device 21 is referred to as a maximum voltage. For example, an input voltage of the PD specified in a PoE standard IEEE 802.3 at is 50-57 volts (V). Therefore, according to the IEEE 802.3at standard, an allowed maximum value of the input voltage of the PD is 57 V, that is, a maximum voltage is 57 V.

In this embodiment of the present invention, the power sourcing voltage of the power sourcing equipment 11 is adjusted, so that the input voltage of the powered device 21 is the maximum voltage. It should be understood that the input voltage of the powered device 21 is infinitely close to the maximum voltage. In a specific implementation, because of a difference in voltage precision of the power sourcing equipment 11, there may be a very small difference between the input voltage of the powered device 21 and the maximum voltage.

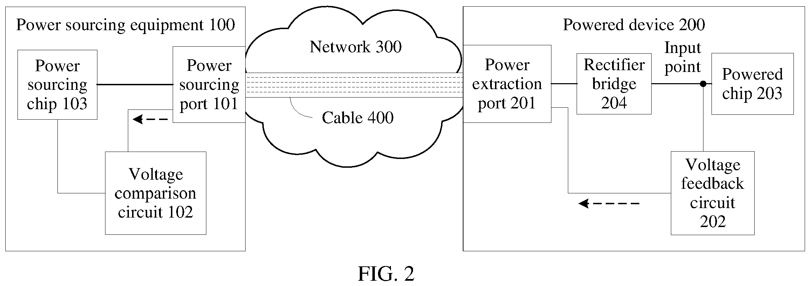

The powered device 21 may directly feed back the input voltage of the powered device 21 to the power sourcing equipment 11 by using hardware and by using an idle wire pair in the cable 40 ("idle wire pair" for short below). For details, refer to the following embodiment shown in FIG. 2.

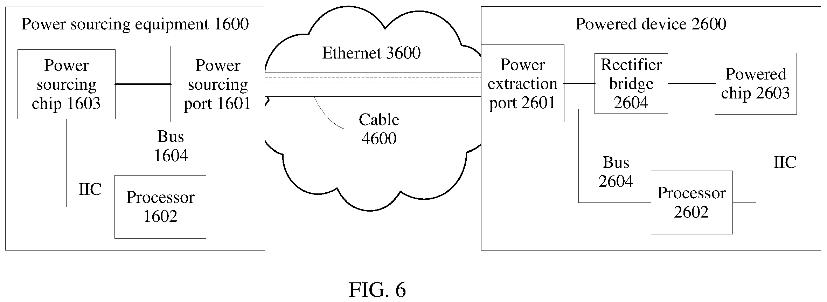

The powered device 21 may alternatively feed back the input voltage of the powered device 21 to the power sourcing equipment 11 through link layer data communication, for example, by using a Link Layer Discovery Protocol (Link Layer Discovery Protocol, LLDP) packet. For details, refer to the following embodiment shown in FIG. 6.

The following briefly describes, by using PoE as an example, an implementation in which the input voltage of the powered device 21 is fed back to the power sourcing equipment 11 by using an idle wire pair in a hardware manner.

First, a wire pair in an Ethernet cable is briefly described. The Ethernet cable usually includes four groups of twisted pairs, which are also referred to as four wire pairs (data pair/signal pair/wire pair), and uses an 8 position 8 contact (8P8C for short) modular connector, which is also referred to as an RJ45 connector. A wire connected to a pin 1 and a wire connected to a pin 2 in the 8P8C connector are one wire pair, which is referred to as a 1-2 wire pair below. A wire connected to a pin 3 and a wire connected to a pin 6 in the 8P8C connector are one wire pair, which is referred to as a 3-6 wire pair below. A wire connected to a pin 4 and a wire connected to a pin 5 in the 8P8C modular connector are one wire pair, which is referred to as a 4-5 wire pair below. A wire connected to a pin 7 and a wire connected to a pin 8 in the 8P8C modular connector are one wire pair, which is referred to as a 7-8 wire pair below.

The PoE standard defines an Alternative A and an Alternative B of power supply by using two wire pairs.

The Alternative A specifies that the 1-2 wire pair and the 3-6 wire pair are used to supply power. The 1-2 wire pair may carry a negative voltage, and the 3-6 wire pair may carry a positive voltage. Alternatively, the 1-2 wire pair may carry a positive voltage, and the 3-6 wire pair may carry a negative voltage. The 4-5 wire pair and the 7-8 wire pair in the Alternative A are idle. If the Alternative A is used for power supply between the power sourcing equipment and the powered device 21, the powered device may feed back the input voltage of the powered device by using an idle wire pair, that is, the 4-5 wire pair or the 7-8 wire pair.

The Alternative B specifies that the 4-5 wire pair and the 7-8 wire pair are used to supply power, and only the 4-5 wire pair carries a positive voltage and the 7-8 wire pair carries a negative voltage. The 1-2 wire pair and the 3-6 wire pair in the Alternative B are idle. If the Alternative B is used for power supply between the power sourcing equipment and the powered device, the powered device may feed back the input voltage of the powered device by using an idle wire pair, that is, the 1-2 wire pair or the 3-6 wire pair.

Because a wire pair ("link" for short below) that is in the cable 40 and that is used by the power sourcing equipment 11 to supply power to the powered device 21 has specific impedance, a voltage drop exists on the link. Therefore, to maintain an input voltage of the powered device 21 at a maximum voltage, a power sourcing voltage that is output by the power sourcing equipment 11 is greater than the maximum voltage. Optionally, the power sourcing voltage that is initially output by the power sourcing equipment 11 may be the maximum voltage, and then an output power sourcing voltage is adjusted based on the input voltage of the powered device 21.

When consumed power of the powered device 21 is the same, a larger voltage of the powered device 21 indicates a smaller current. Therefore, if the input voltage of the powered device 21 is the maximum voltage, the current on the link can be minimized, so that a link loss can be minimized, and electric power energy of the power sourcing equipment 21 can be saved.

In the following, a specific example is used to compare a case in which an output voltage of the power sourcing equipment 11 is not adjusted (that is, the output voltage of the power sourcing equipment 11 is fixed) with a case in which an output voltage of the power sourcing equipment 11 is adjusted so that the input voltage of the powered device 21 is the maximum voltage.

For example, impedance R of the link is 12.5 ohms (ohm), and consumed power (Ppd) of the powered device 21 is 34.4 watts (W).

If the power sourcing equipment 11 outputs a power sourcing voltage (Vpse) of 53 V as usual, output power (Ppse) of the power sourcing equipment 11 is I × 53 V, where I is the current on the link, and lost power (Pch) on the link is I × I × R (that is, I × I × 12.5 ohm).

The output power of the power sourcing equipment 11 is equal to a sum of the consumed power of the powered device and the lost power on the link, in other words, Ppse = Ppd + Pch. Refer to the following equation (1).

$$I \times 53\ V = 34.4\ W + I \times I \times 12.5\ ohm \qquad \text{Equation (1)}$$

A current I = 0.8 ampere (A) may be obtained by solving the equation (1).

Therefore, the lost power Pch of the link = 0.8 A × 0.8 A × 12.5 ohm = 8 W.

The input voltage (Vpd) of the powered device 21 is the power sourcing voltage Vpse minus the voltage drop on the link, in other words, Vpd = 53 V - 0.8 A × 12.5 ohm = 43 V.

If according to the technical solutions of the present invention, under the same condition (the impedance R of the link is 12.5 ohm and the consumed power Ppd of the powered device 21 is 34.4 W), the input voltage of the powered device 21 is the maximum voltage Vmax (57 V), the current on the link is I = 34.4 W/57 V.

The output voltage Vpse of the power sourcing equipment 11 is a sum of the input voltage Vpd and the voltage drop on the link, in other words, Vpse = 57 V + I × 12.5 ohm ≈ 64.54386 V.

The lost power Pch on the link = I × I × R = (34.4 W/57 V) × (34.4 W/57 V) × 12.5 ohm ≈ 4.55 W. It can be learned that the lost power on the link decreases from 8 W to 4.55 W.

It can be learned from the foregoing examples that, by using a concept of the present invention, the power sourcing voltage of the power sourcing equipment 11 is adjusted so that the input voltage of the powered device 21 is the maximum voltage. This can significantly reduce a link loss.

In this embodiment of the present invention, the power supply system using the PoE technology is used as an example to describe the concept of the present invention. However, the present invention is not limited to the PoE technology only.

In this embodiment of the present invention, the power sourcing equipment adjusts, in real time, the output power sourcing voltage based on the input voltage of the powered device, so that the input voltage of the powered device remains at the maximum voltage, and the current on the link from the power sourcing equipment to the powered device can be minimized, thereby reducing the link loss and saving the electric power energy of the power sourcing equipment.

Based on a same inventive concept, and on a basis of the power supply system 10 shown in FIG. 1, an embodiment of the present invention provides a schematic structural diagram of power sourcing equipment and a powered device, as shown in FIG. 2.

The power sourcing equipment 100 includes a power sourcing port 101, a voltage comparison circuit 102, and a power sourcing chip 103. The power sourcing chip 103 is connected to the power sourcing port 101. The power sourcing chip 103 is configured to output electric power to the power sourcing port 101, so as to supply power to a powered device 200. The powered device 200 includes a power extraction port 201, a voltage feedback circuit 202, a powered chip 203, and a rectifier bridge 204. The rectifier bridge 204 is separately connected to the power extraction port 201 and the powered chip 203. The rectifier bridge 204 is configured to convert a voltage that is input from the power extraction port 201 into a same polarity and output the voltage to the powered chip 203, so as to ensure that a voltage that is input to a positive electrode of the powered chip 203 is a positive voltage and a voltage that is input to a negative electrode of the powered chip 203 is a negative voltage.

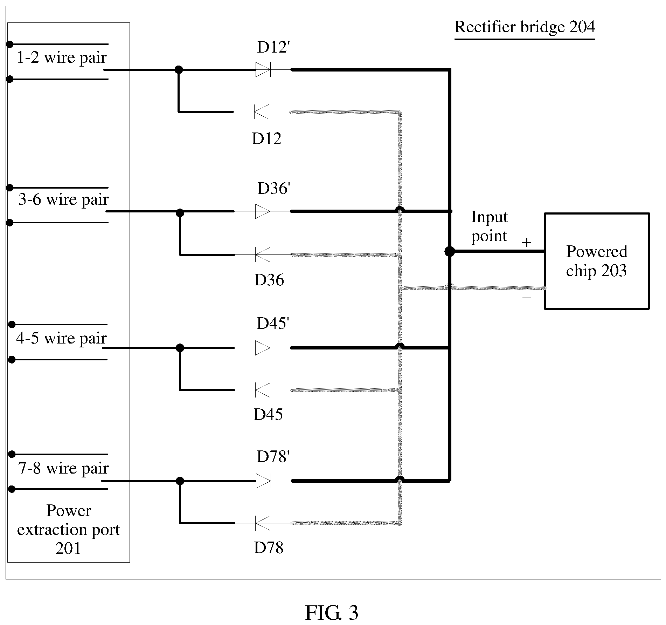

A rectifier bridge is also referred to as a bridge rectifier. For example, FIG. 3 is a schematic circuit diagram of a common rectifier bridge 204. The rectifier bridge 204 includes four groups of diodes. Each wire pair uses one group of diodes, and each group of diodes has two independent diodes. One end of a first group of diodes D12 and D12' is connected to a 1-2 wire pair, and the other end is separately connected to the positive electrode ("+" shown in FIG. 3) and the negative electrode ("-" shown in FIG. 3) of the powered chip 203. One end of a second group of diodes D36 and D36' is connected to a 3-6 wire pair, and the other end is separately connected to the positive electrode and the negative electrode of the powered chip 203. One end of a third group of diodes D45 and D45' is connected to a 4-5 wire pair, and the other end is separately connected to the positive electrode and the negative electrode of the powered chip 203. One end of a fourth group of diodes D78 and D78' is connected to a 7-8 wire pair, and the other end is separately connected to the positive electrode and the negative electrode of the powered chip 203. In this way, regardless of whether a voltage that is input from a wire pair is positive or negative, the voltage is converted (that is, converted based on the positive electrode and the negative electrode of the powered chip 203) by the rectifier bridge 204 shown in FIG. 3 into the same polarity, and is output to the powered chip 203.

Further, as shown in FIG. 2, the voltage feedback circuit 202 is separately connected to the power extraction port 201 and the powered chip 203. Specifically, the voltage feedback circuit 202 is connected to an input point of the powered chip 203 to obtain a voltage of the input point of the powered chip 203, so as to obtain an input voltage of the powered device 200. Then, the voltage feedback circuit 202 outputs a feedback voltage corresponding to the input voltage to an idle wire pair, and transmits the feedback voltage to the power sourcing equipment 100. A dashed arrow in FIG. 2 represents a feedback voltage.

In this embodiment of the present invention, the input voltage of the powered device 200 is an input voltage of the powered chip 203. The input voltage of the powered chip 203 is specifically the voltage of the input point of the powered chip 203. Both the input voltage of the powered device 200 and the input voltage of the powered chip 203 are the voltage of the input point of the powered chip 203, which may be referred to as an "input voltage" below.

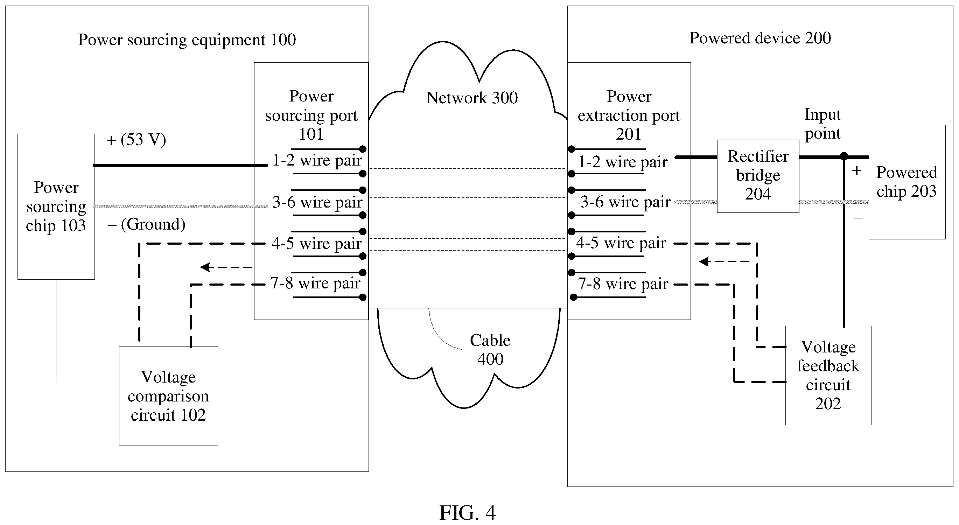

The feedback voltage corresponds to the input voltage based on a voltage correspondence. The voltage correspondence may be a proportional relationship (for example, 1:1, 2:1, or 1:2). Alternatively, the voltage correspondence may be a functional relationship. A specific function is not limited in the present invention, provided that an objective of the present invention can be implemented. The voltage feedback circuit 202 is further configured to convert the input voltage into the feedback voltage based on the voltage correspondence. For example, referring to FIG. 4, an Alternative A is used for power supply between the power sourcing equipment 100 and the powered device 200, where a voltage transmitted by a 1-2 wire pair is 53 V, and a voltage transmitted by a 3-6 wire pair is ground (also referred to as an equipotential RTN). The voltage feedback circuit 202 sends a feedback voltage to the power sourcing equipment 100 by using an idle wire pair, that is, a 4-5 wire pair and/or a 7-8 wire pair. Specifically, the voltage feedback circuit 202 is connected to an input point of the powered chip 203, obtains the input voltage, outputs a feedback voltage corresponding to the input voltage to the 4-5 wire pair and/or the 7-8 wire pair, and transmits the feedback voltage to a voltage comparison circuit 102 of the power sourcing equipment. A dashed arrow in FIG. 4 represents a feedback voltage.

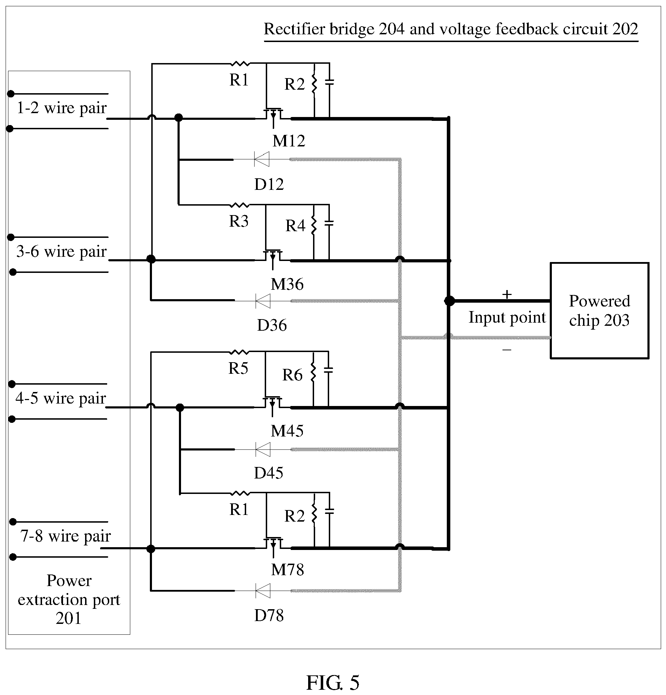

In a specific implementation, the feedback voltage may correspond to the input voltage based on proportional relationship of 1:1, in other words, the feedback voltage is the input voltage. The voltage feedback circuit 202 directly outputs the input voltage to an idle wire pair. For example, as shown in FIG. 5, the input voltage is transmitted to the power sourcing equipment 100.

FIG. 5 is a schematic circuit diagram of a rectifier bridge 204 and a voltage feedback circuit 202 according to an embodiment of the present invention. As shown in FIG. 5, the voltage feedback circuit 202 and the rectifier bridge 204 in the powered device 200 are designed together. Compared with FIG. 4, it can be learned that by replacing diodes (D12', D36', D45', and D78') with metal-oxide semiconductor field-effect transistors (MOSFET), also referred to as MOS transistors (M12, M36, M45, and M78), the input voltage can be directly output to an idle wire pair by using two resistors.

In FIG. 5, if an Alternative A is used for power supply, because the power sourcing equipment 100 outputs a power sourcing voltage to the powered device 200 on a 1-2 wire pair and a 3-6 wire pair, the input voltage can be fed back to a 7-8 wire pair only by using R5 and R6, and/or be fed back to a 4-5 wire pair by using R7 and R8. If an Alternative B is used for power supply, because the power sourcing equipment 100 outputs a power sourcing voltage to the powered device 200 on a 4-5 wire pair and a 7-8 wire pair, the input voltage can be fed back to a 3-6 wire pair only by using R1 and R2, and/or be fed back to a 1-2 wire pair by using R3 and R4. By using a voltage feedback circuit 202 shown in FIG. 5, the feedback voltage is equal to an input voltage of the powered chip 201, and the input voltage is transmitted on two idle wire pairs. In this way, a voltage comparison circuit 102 can obtain the feedback voltage from the two idle wire pairs.

Further, as shown in FIG. 2, the voltage comparison circuit 102 is separately connected to the power sourcing port 101 and the power sourcing chip 103. The voltage comparison circuit 102 is configured to: obtain the feedback voltage from the power sourcing port 101 (specifically, from the idle wire pair), compare the feedback voltage with a reference voltage to obtain a comparison result, and then output the comparison result to the power sourcing chip 103, so as to instruct the power sourcing chip 103 to adjust an output power sourcing voltage. In an implementation, the reference voltage is a maximum voltage, and the voltage comparison circuit 102 converts the feedback voltage back into the input voltage based on the voltage correspondence, and compares the input voltage with the maximum voltage to obtain the comparison result. In another implementation, the reference voltage corresponds to a maximum voltage based on the voltage correspondence, and the voltage comparison circuit 102 compares the feedback voltage with the reference voltage to obtain the comparison result.

The voltage comparison circuit 102 and the voltage feedback circuit 202 may pre-configure the voltage correspondence. In this way, the voltage feedback circuit 202 may convert the input voltage into the feedback voltage based on the voltage correspondence. Alternatively, the voltage comparison circuit 102 may convert the feedback voltage back into the input voltage based on the voltage correspondence, or convert the maximum voltage into the reference voltage. The maximum voltage is pre-configured in the power sourcing equipment 100.

If the voltage feedback circuit 202 shown in FIG. 5 is used, the voltage obtained by the voltage comparison circuit 102 from the idle wire pair is the input voltage, and the reference voltage in the power sourcing equipment 100 is a maximum voltage. The voltage comparison circuit 102 compares the input voltage with the maximum voltage to obtain a comparison result, and then outputs the comparison result to the power sourcing chip 103, so as to instruct the power sourcing chip 103 to adjust an output power sourcing voltage.

The comparison result is used to indicate that the maximum voltage is less than, greater than, or equal to the input voltage. For example, "1" indicates that the maximum voltage is greater than the input voltage, "0" indicates that the maximum voltage is equal to the input voltage, and "-1" indicates that the maximum voltage is less than the input voltage. For another example, "high level" indicates that the maximum voltage is greater than the input voltage, "low level" indicates that the maximum voltage is less than the input voltage, and no level output indicates that the maximum voltage is equal to the input voltage.

In this embodiment of the present invention, when the comparison result indicates that the maximum voltage is less than or greater than the input voltage, the comparison result may also be used as an adjustment instruction. For example, "1" or "high level" indicates that the maximum voltage is greater than the input voltage, and is used to instruct to increase the power sourcing voltage. "-1" or "low level" indicates that the maximum voltage is less than the input voltage, and is used to instruct to decrease the power sourcing voltage.

The power sourcing chip 103 is configured to adjust, based on the comparison result and according to a preset adjustment policy, the power sourcing voltage that is output by the power sourcing chip 103, so that the input voltage is the maximum voltage, thereby reducing a link loss.

The preset adjustment policy may be adjusting the power sourcing voltage based on a fixed step (a fixed voltage value).

The step may be set according to a precision requirement, an empirical value, or the like, for example, set to 1 V, 0.5 V, 0.1 V, or 0.01 V. If an excessively large step is set, adjustment accuracy may not be high. If an excessively small step is set, a quantity of times of adjustment may increase. Real-time feedback and real-time adjustment can nearly be implemented by using hardware (the voltage feedback circuit and the voltage comparison circuit). Therefore, the step may be set to a relatively small value, so as to improve adjustment precision.

Further, the comparison result may include a voltage difference. The voltage difference is a difference between the maximum voltage (minuend) and the input voltage (subtrahend). Specifically, a difference between a reference voltage and a feedback voltage is converted based on the voltage correspondence to obtain the voltage difference. When the voltage difference is a positive number, it indicates that the maximum voltage is greater than the input voltage. When the voltage difference is a negative number, it indicates that the maximum voltage is less than the input voltage. When the voltage difference is 0, it indicates that the maximum voltage is equal to the input voltage. Considering precision, that the voltage difference is 0 may actually be that the voltage difference is infinitely close to 0 (the input voltage is infinitely close to the maximum voltage), and is rounded to 0.

For example, the maximum voltage is 57 V. When the power sourcing voltage Vpse is 53 V, the input voltage Vpd is 43 V. Assuming that the voltage feedback circuit 202 shown in FIG. 5 is used, the feedback voltage is equal to the input voltage (43 V), and the reference voltage in the power sourcing equipment 100 is equal to the maximum voltage (57 V). The voltage feedback circuit 202 sends the feedback voltage (43 V) to the power sourcing equipment 100 by using the 4-5 wire pair and the 7-8 wire pair. The voltage comparison circuit 102 receives the feedback voltage (43 V) from an idle wire pair (the 4-5 wire pair or the 7-8 wire pair), compares the feedback voltage (43 V) with the reference voltage (57 V), and outputs a voltage difference $\Delta V$ ($\Delta V = 57$ V - 43 V = 14 V) to the power sourcing chip 103. The power sourcing chip 101 adjusts, based on the voltage difference $\Delta V$ (14 V) and according to a preset adjustment policy, the power sourcing voltage of the power sourcing equipment 100.

The preset adjustment policy may be alternatively determining a voltage adjustment value based on the voltage difference, and gradually adjusting the power sourcing voltage.

In a possible implementation, a value correspondence between a voltage difference range and a voltage adjustment value is preset. For example, the value correspondence is as follows: When the voltage difference $\Delta V$ is greater than or equal to 10 V, the voltage adjustment value is 5 V; when the voltage difference is greater than or equal to 5 V and less than 10 V, the voltage adjustment value is 2 V; when the voltage difference is greater than or equal to 1 V and less than 5 V, the voltage adjustment value is 0.5 V; when the voltage difference is less than 1 V, the voltage adjustment value is 0.1 V. If a precision requirement is relatively high, the value correspondence may further include: When the voltage difference is less than 0.1 V, the voltage adjustment value is 0.01 V; when the voltage difference is less than 0.01 V, the voltage adjustment value is 0.001 V, and so on.

In another possible implementation, the voltage adjustment value is a proportion value of the voltage difference, for example, the voltage adjustment value is half of the voltage difference, or one quarter of the voltage difference, or one fifth of the voltage difference. For example, assuming that the maximum voltage is 57 V, a current power sourcing voltage of the power sourcing equipment 100 is 53 V, and the voltage difference ΔV is 14 V, half of the voltage difference ΔV, that is, 7 V, is added to the current power sourcing voltage of the power sourcing equipment 100, to obtain an adjusted power sourcing voltage of 60 V. Then the power sourcing equipment 100 obtains a new voltage difference based on the feedback voltage, and then adjusts the power sourcing voltage of the power sourcing equipment 100 until the voltage difference ΔV is 0, that is, the input voltage of the powered device 200 is the maximum voltage (57 V).

The preset adjustment policy may be alternatively calculating, based on the voltage difference, a target power sourcing voltage of the power sourcing equipment 100 when the input voltage of the powered device 200 is the maximum voltage (for example, 57 V). Then the power sourcing equipment 100 supplies power based on the target power sourcing voltage obtained through calculation, so that the input voltage of the powered device 200 is the maximum voltage.

For example, the maximum voltage Vmax is 57 V, the power sourcing voltage Vpse of the power sourcing equipment 100 is 53 V, a voltage difference ΔV is 14 V, and the input voltage Vpd of the powered device 200 is 43 V (which may be obtained based on the voltage difference ΔV and the reference voltage). The power sourcing equipment 100 learns, through detection, that the current I on the link is 0.8 A, so that link impedance R and consumed power Ppd of the powered device 200 may be calculated. Details are as follows:

$$\text{Link impedance R} = (Vpse - Vpd)/I = (53\ V - 43\ V)/0.8\ A = 12.5\ ohm$$

$$\text{Consumed power Ppd} = Vpd \times I = 43\ V \times 0.8\ A = 34.4\ W$$

Then the power sourcing equipment 100 may calculate the target power sourcing voltage Vpse_g that needs to be output by the power sourcing equipment 100 when the consumed power of the powered device 200 remains unchanged and the input voltage of the powered device 200 is the maximum voltage Vmax. Specifically, a voltage drop Vch on the link when the input voltage of the powered device 200 is the maximum voltage Vmax may be first calculated, that is, Vch = (Ppd/Vmax) × R = (34.4 W/57 V) × 12.5 ohm ≈ 7.54386 V. Finally, a target power sourcing voltage Vpse_g that needs to be output by the power sourcing equipment 100 is calculated, where Vpse_g is a sum of the voltage drop Vch on the link and the maximum voltage Vmax, that is, Vpse = Vmax + Vch = 57 V + 7.54386 V = 64.54386 V.

Then the power sourcing equipment directly outputs a power sourcing voltage 64.54386 V, so that the input voltage of the powered device 200 can be the maximum voltage 57 V.

The target power sourcing voltage is directly calculated based on the voltage difference. Therefore, a plurality of times of feedback and a plurality of times of adjustment are not required so that an objective can be quickly achieved. However, operation overheads of the power sourcing equipment 100 increase.

Further, the power sourcing equipment 100 may further include a processor (not shown in FIG. 2), such as a central processing unit (central processing unit, CPU), a network processor (network processor, NP), or a combination of a CPU and an NP. The processor is used for communication between the power sourcing equipment 100 and another device. For example, the power sourcing equipment 100 performs power negotiation, data transmission, and the like with the powered device 200. Optionally, the power sourcing equipment 100 further includes a memory (not shown in FIG. 2), configured to store data, or a program instruction, or data and a program instruction. The memory may include a volatile memory, such as a random access memory (random-access memory, RAM). Alternatively, the memory may include a nonvolatile memory, such as a flash memory, a hard disk drive (hard disk drive, HDD), or a solid state drive (solid-state drive, SSD). Alternatively, the memory 410 may include a combination of the foregoing types of memories. Similarly, the powered device 100 may further include a processor, a memory, and the like.

For the power sourcing equipment and the powered device provided in this embodiment of the present invention, only an example of connection relationships and functions of components, modules, and the like that are related to the present invention is described. A person skilled in the art may understand that the power sourcing equipment and the powered device may further include another component according to function and service requirements. This is not limited in the present invention.

In this embodiment of the present invention, the voltage feedback circuit is disposed in the powered device, and the voltage comparison circuit is disposed in the power sourcing equipment, so that the voltage feedback circuit of the powered device directly transmits the feedback voltage to the voltage comparison circuit of the power sourcing equipment by using the idle wire pair. In this way, the power sourcing equipment may obtain the input voltage of the powered device in real time, and adjust the output power sourcing voltage in real time until the input voltage of the powered device is the maximum voltage, so that the current on the link from the power sourcing equipment to the powered device can be reduced, thereby reducing a link loss and saving electric power energy of the power sourcing equipment.

Based on a same inventive concept, and on a basis of the power supply system 10 shown in FIG. 1, with reference to FIG. 6, an embodiment of the present invention provides another schematic structural diagram of power sourcing equipment and a powered device. The power sourcing equipment 1600 includes a power sourcing port 1601, a processor 1602, and a power sourcing chip 1603. The processor 1602 may be connected to the power sourcing chip 1603 by using an inter-integrated circuit (Inter-Integrated Circuit, IIC) bus. The processor 1602 may be connected to the power sourcing port 1601 by using a bus 1604. The powered device 2600 includes a power extraction port 2601, a processor 2602, and a powered chip 2603, and may further include a rectifier bridge 2604 and a bus 2605. The processor 2602 may be connected to the powered chip 2603 by using an IIC bus. The rectifier bridge 2604 is separately connected to the power extraction port 2601 and the powered chip 2603. The processor 1602 may be connected to the power extraction port 2601 by using the bus 2605.

The power sourcing chip 1603 is configured to output a power sourcing voltage to the power sourcing port 1601, so as to supply power to the powered device 200.

The powered device 2600 is connected to the power sourcing port 1601 by using a cable, and extracts electric power from the power sourcing equipment 1600 by using the power sourcing port 1601.

Before the power sourcing chip 1603 outputs the power sourcing voltage to the power sourcing port 1601, the power sourcing chip 1603 is further configured to detect whether the power sourcing port 1601 is connected to a valid PD, that is, detect whether the powered device 200 is a valid PD. When detecting that the power sourcing port 1601 is connected to a valid PD, that is, the powered device 200 is a valid PD, the power sourcing chip 1603 supplies power to the powered device 2600 based on a default power sourcing voltage, for example, usually 48 V or 53 V.

The processor 2602 is configured to: obtain an input voltage of the powered chip 2603, and feed back the input voltage to the power sourcing equipment 1600.

The processor 2602 may generate a link layer packet, such as an LLDP packet, where the link layer packet includes the input voltage. The powered device 2600 may further include a transceiver (deployed in the power extraction port 2601, and not shown in FIG. 6), configured to send the link layer packet (the LLDP packet) to the power sourcing equipment 1600, so as to feed back the input voltage to the power sourcing equipment 1600. Specifically, the processor 2602 places the input voltage (specifically, a value of the input voltage) into the link layer packet (for example, the LLDP packet), and sends the link layer packet to the power sourcing equipment 1600 by using the transceiver.

The processor 2602 may periodically obtain the input voltage of the powered chip 2603, generate the link layer packet (the LLDP packet), and feed back the input voltage to the power sourcing equipment 1600. The processor 2602 may further immediately generate the link layer packet (the LLDP packet) when the input voltage of the powered chip 2603 changes, and feed back the input voltage to the power sourcing equipment 1600.

Optionally, the powered device 2600 further includes a memory (not shown in the figure), configured to store a program instruction, and the processor 2602 executes the program instruction stored in the memory to implement the aforementioned functions.

The processor 1602 is configured to: obtain the input voltage from the link layer packet sent by the powered device 100, and instruct, based on the input voltage, the power sourcing chip to adjust an output power sourcing voltage. The power sourcing equipment 1600 may further include a transceiver (deployed in the power sourcing port 1601, and not shown in FIG. 6), configured to receive the link layer packet sent by the powered device 2600.

In a possible implementation, the processor 1602 determines a target power sourcing voltage based on the input voltage, and sends a voltage adjustment instruction to the power sourcing chip 1603, where the voltage adjustment instruction includes the target power sourcing voltage, and the voltage adjustment instruction is used to instruct the power sourcing chip 1603 to adjust the output power sourcing voltage to the target power sourcing voltage. The power sourcing chip 1603 is configured to: receive the voltage adjustment instruction sent by the processor 1602, and adjust the output power sourcing voltage to the target power sourcing voltage according to the voltage adjustment instruction, until the input voltage of the powered device 2600 is a maximum voltage.

In another possible implementation, the processor 1602 compares the input voltage with the maximum voltage to obtain a comparison result, and sends the comparison result to the power sourcing chip 1603. The power sourcing chip 1603 adjusts the output power sourcing voltage based on the comparison result and according to a preset adjustment policy (for details, refer to the descriptions in the embodiment shown in FIG. 2).

Further, while adjusting the power sourcing voltage, the powered device 2600 may need to adjust power. The powered device 2600 sends the LLDP packet to the power sourcing equipment 1600, to apply to adjust consumed power to the required power. where the LLDP packet includes required power. The LLDP packet may further include the input voltage. After the power sourcing equipment 1600 approves the application of the powered device 2600, the consumed power of the powered device 2600 is adjusted to the required power. The processor 1602 adjusts the power sourcing voltage based on the required power and the input voltage, so that the input voltage of the powered device 2600 is the maximum voltage while meeting the required power. If the required power of the powered device 2600 is greatly different from current consumed power of the powered device 1600, the power sourcing equipment may gradually adjust output supply power until the required power of the powered device 2600 is met, and the power sourcing equipment 1600 may gradually adjust the power sourcing voltage while gradually adjusting the supply power. Alternatively, the power sourcing equipment 1600 may adjust the power sourcing voltage according to the preset adjustment policy after power adjustment ends.

Optionally, the powered device 2600 further includes a memory (not shown in the figure), configured to store a program instruction, and the processor 2602 executes the program instruction stored in the memory to implement the aforementioned functions.

In this embodiment of the present invention, the power sourcing equipment obtains the input voltage of the powered device through link layer communication, and adjusts the output power sourcing voltage based on the input voltage until the input voltage of the powered device is the maximum voltage, so that a current on a link from the power sourcing equipment to the powered device can be reduced, thereby reducing a link loss and saving electric power energy of the power sourcing equipment.

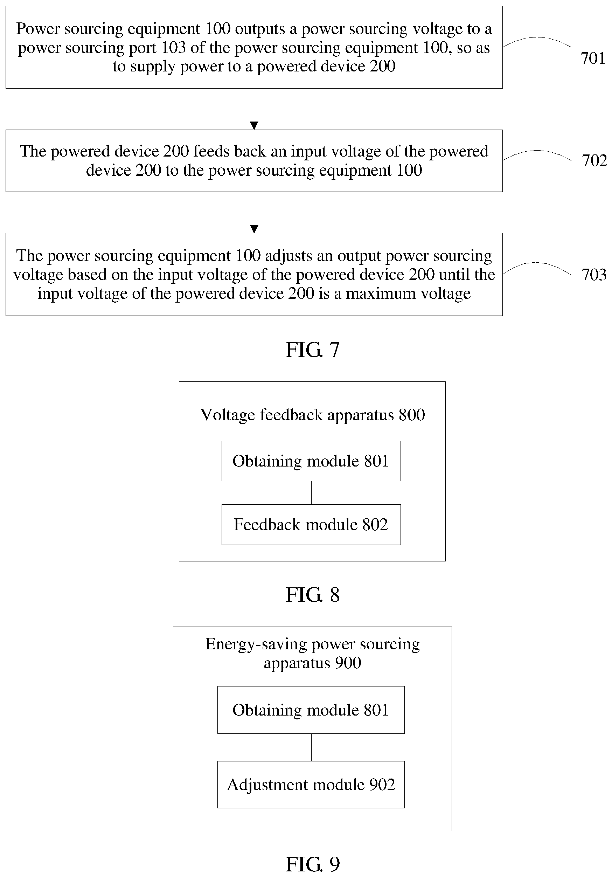

FIG. 7 shows an energy-saving power sourcing method according to an embodiment of the present invention, and the method includes the following steps.

Step 701: Power sourcing equipment outputs a power sourcing voltage to a power sourcing port of the power sourcing equipment, so as to supply power to a powered device.

The powered device is connected to the power sourcing port, and extracts electric power from the power sourcing equipment by using the power sourcing port.

Before step 701, the method further includes the following step:

The power sourcing equipment detects whether the power sourcing port is connected to a valid PD, that is, detects whether the powered device is a valid PD. When detecting that the power sourcing port 101 is connected to a valid PD, that is, the powered device is a valid PD, the power sourcing equipment supplies power to the powered device based on a default power sourcing voltage, for example, usually 48 V or 53 V.

Step 702: The powered device feeds back an input voltage of the powered device to the power sourcing equipment.

Step 703: The power sourcing equipment adjusts an output power sourcing voltage based on the input voltage of the powered device until the input voltage of the powered device is a maximum voltage.

The power sourcing equipment obtains the input voltage of the powered device, and adjusts, based on the input voltage, a power sourcing voltage that is output by the power sourcing equipment.

The powered device may feed back the input voltage to the power sourcing equipment through link layer data communication, specifically, by sending a link layer packet such as an LLDP packet. Specifically, the powered device obtains the input voltage, places the input voltage (specifically, a value of the input voltage) into the link layer packet (for example, the LLDP packet), and sends the link layer packet to the power sourcing equipment. The power sourcing equipment receives the link layer packet sent by the powered device, obtains the input voltage from the link layer packet, and adjusts, based on the input voltage, the power sourcing voltage that is output by the power sourcing equipment. For example, the power sourcing equipment is the power sourcing equipment 1600 shown in FIG. 6, and the powered device is the powered device 2600 shown in FIG. 6. For details, refer to the descriptions in the embodiment shown in FIG. 6. Details are not described herein again.

The powered device may periodically send the LLDP packet, and feed back the input voltage of the powered device. The powered device may further immediately send the LLDP packet when the input voltage changes, and feed back the input voltage to the power sourcing equipment.

When a cable between the power sourcing equipment and the powered device still has an idle wire pair in addition to being used for power supply, for example, when two wire pairs are used in PoE to supply power, the powered device may alternatively feed back the input voltage of the powered device to the power sourcing equipment by using hardware, in other words, send the feedback voltage to the power sourcing equipment. Specifically, the powered device outputs the feedback voltage corresponding to the input voltage to the idle wire pair, and transmits the feedback voltage to the power sourcing equipment. The power sourcing equipment receives the feedback voltage from the idle wire pair. That the power sourcing equipment adjusts a power sourcing voltage of the power sourcing equipment based on the input voltage is specifically that the power sourcing equipment adjusts the output power sourcing voltage based on a comparison result of the feedback voltage and a reference voltage and according to a preset adjustment policy. For example, the power sourcing equipment is the power sourcing equipment 100 shown in FIG. 2, and the powered device is the powered device 200 shown in FIG. 2. For details, refer to the descriptions in the embodiment shown in FIG. 2. Details are not described herein again.

According to the energy-saving power sourcing method provided in this embodiment of the present invention, the power sourcing equipment adjusts the power sourcing voltage of the power sourcing equipment based on the input voltage of the powered device fed back by the powered device, so that the input voltage of the powered device is the maximum voltage, and a current on a link is minimized, thereby reducing a link loss and saving electric power resources of the power sourcing equipment.

FIG. 8 shows a voltage feedback apparatus 800 according to an embodiment of the present invention. The voltage feedback apparatus 800 includes an obtaining module 801 and a feedback module 802.

The obtaining module 801 is configured to obtain an input voltage of a powered device.

The feedback module 802 is configured to feed back the input voltage of the powered device to power sourcing equipment 100, so that the power sourcing equipment 100 adjusts an output power sourcing voltage based on the input voltage until the input voltage of the powered device is a maximum voltage.

The feedback module 802 may directly send the input voltage to the power sourcing equipment. The feedback module may alternatively convert the input voltage into a feedback voltage based on a voltage correspondence, and then send the feedback voltage to the power sourcing equipment. Specifically, the feedback module 802 outputs the feedback voltage corresponding to the input voltage to an idle wire pair, and transmits the feedback voltage to the power sourcing equipment. The idle wire pair is a wire pair that is in a cable used to connect the powered device and the power sourcing equipment and that is not used for power supply. The feedback voltage corresponds to the input voltage based on the voltage correspondence. For example, the obtaining module 801 and the feedback module 802 may be implemented by the voltage feedback circuit 202 in the embodiment shown in FIG. 2. For details, refer to the descriptions in the embodiment shown in FIG. 2. Details are not described herein again.

Alternatively, the feedback module 802 places the input voltage into a link layer packet (for example, an LLDP packet), and sends the link layer packet to the power sourcing equipment 100, so as to feed back the input voltage to the power sourcing equipment 100. For example, in the voltage feedback apparatus 800, there is a processor and a memory storing a program instruction. The processor executes the program instruction stored in the memory, to obtain the input voltage of the powered device, and places the input voltage into the link layer packet (for example, the LLDP packet). A transceiver is configured to send the link layer packet to the power sourcing equipment 100. For example, the obtaining module 801 and the feedback module 802 may be implemented by the processor 2602 (and an optional transceiver and an optional memory) in the embodiment shown in FIG. 6. For details, refer to the descriptions in the embodiment shown in FIG. 6. Details are not described herein again.

The voltage feedback apparatus 800 is used in the powered device 21 in the power supply system 10 shown in FIG. 1.

FIG. 9 shows an energy-saving power sourcing apparatus 900 according to an embodiment of the present invention. The energy-saving power sourcing apparatus 900 includes an obtaining module 901 and an adjustment module 902.

The obtaining module 901 is configured to obtain an input voltage of a powered device.

The adjustment module 902 is configured to adjust, based on the input voltage, a power sourcing voltage that is output by power sourcing equipment until the input voltage of the powered device is a maximum voltage.

The energy-saving power sourcing apparatus may be used in the power sourcing equipment in the power supply system 10 shown in FIG. 1.

In a possible implementation, the obtaining module 901 is configured to obtain a feedback voltage from an idle wire pair, where the feedback voltage corresponds to the input voltage based on a voltage correspondence, and the idle wire pair is a wire pair that is in a cable used to connect the powered device and the power sourcing equipment and that is not used for power supply. The adjustment module 902 is configured to: compare the feedback voltage with a reference voltage to obtain a comparison result, and adjust, based on the comparison result and according to a preset adjustment policy, the power sourcing voltage that is output to a power sourcing port. For example, the obtaining module 901 and the adjustment module 903 may be implemented jointly by the voltage comparison circuit 102 and the power sourcing chip 103 in the embodiment shown in FIG. 2. For details, refer to the descriptions in the embodiment shown in FIG. 2. Details are not described herein again.

In another possible implementation, the obtaining module 901 is configured to receive a link layer packet (for example, an LLDP packet) sent by the powered device, where the link layer packet includes the input voltage, and obtain the input voltage from the link layer packet. The adjustment module 902 is configured to: compare the input voltage with the maximum voltage to obtain a comparison result, and adjust an output power sourcing voltage based on the comparison result and according to a preset adjustment policy; or determine a target power sourcing voltage based on the input voltage, and adjust the power sourcing voltage that is output by the power sourcing equipment to the target power sourcing voltage. For example, in the energy-saving power sourcing apparatus 900, a transceiver is configured to receive the link layer packet sent by the powered device, and there is a processor and a memory storing a program instruction. The processor executes the program instruction stored in the memory to implement a function of the adjustment module 903. For another example, the obtaining module 901 and the adjustment module 903 may be implemented jointly by the processor 1602 (and an optional transceiver and an optional memory) and the power sourcing chip 1603 in the embodiment shown in FIG. 6. For details, refer to the descriptions in the embodiment shown in FIG. 6. Details are not described herein again.

According to the voltage feedback apparatus and the energy-saving power sourcing apparatus provided in the embodiments of the present invention, the power sourcing equipment may adjust the output power sourcing voltage based on the input voltage of the powered device, so that the powered device remains at the maximum voltage. In this way, a link loss can be reduced, and electric power resources of the power sourcing equipment can be saved.

In the embodiments of the present invention, the PoE is used as an example to describe how the PoE port in the PoE device adaptively serves as a power sourcing port or a power extraction port. The present invention is also applicable to a scenario in which a similar power supply technology is used, for example, Power over Data lines (Power over Data lines, PoDL). In the PoDL scenario, a person skilled in the art may make adaptive modifications, variations, or replacements of different protocols based on the embodiments of the present invention, and these shall also fall within the protection scope of the present invention.

A person of ordinary skill in the art may understand that all or some of the steps of the method embodiments may be implemented by a program instructing related hardware. The program may be stored in a computer readable storage medium. The storage medium may be a random access memory, a read-only memory, a flash memory, a hard disk, a solid state drive, a compact disc, or the like.

The foregoing descriptions are merely example implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. Power sourcing equipment, comprising a power sourcing port, a power sourcing chip, and a voltage comparison circuit, wherein the power sourcing chip is connected to the power sourcing port;
the voltage comparison circuit is separately connected to the power sourcing port and the power sourcing chip;
the power sourcing chip is configured to output a power sourcing voltage to the power sourcing port, so as to supply power to a powered device, wherein the powered device is connected to the power sourcing port by using a cable;
the voltage comparison circuit is configured to: obtain a feedback voltage from the power sourcing port, compare the feedback voltage with a reference voltage, and output a comparison result, wherein the feedback voltage corresponds to an input voltage of the powered device based on a voltage correspondence; and
the power sourcing chip is further configured to adjust, based on the comparison result and according to a preset adjustment policy, a power sourcing voltage that is output to the power sourcing port until the input voltage of the powered device is a maximum voltage.

2. The power sourcing equipment according to claim 1, wherein the voltage comparison circuit is specifically configured to obtain the feedback voltage from an idle wire pair of the cable, and the idle wire pair is a wire pair that is in the cable and that is not used for power supply.

3. The power sourcing equipment according to claim 1 or 2, wherein the comparison result comprises a voltage difference, and the voltage difference is a difference between the maximum voltage and the input voltage of the powered device; and
the preset adjustment policy is:

   determining a voltage adjustment value based on the voltage difference, and gradually adjusting a power sourcing voltage that is output to the power sourcing port; or
   calculating, based on the voltage difference, a target power sourcing voltage of the power sourcing equipment when the input voltage of the powered device is the maximum voltage; and adjusting, based on the target power sourcing voltage, the power sourcing voltage that is output to the power sourcing port.

4. The power sourcing equipment according to claim 3, wherein the reference voltage corresponds to the maximum voltage based on the voltage correspondence; and
the voltage comparison circuit is specifically configured to convert a difference between the feedback voltage and the reference voltage based on the voltage correspondence, to obtain the voltage difference.

5. The power sourcing equipment according to any one of claims 1 to 3, wherein the reference voltage is the maximum voltage; and
the voltage comparison circuit is specifically configured to: convert the feedback voltage back into the input voltage based on the voltage correspondence, and compare the input voltage with the reference voltage to obtain the comparison result.

6. A powered device, comprising a power extraction port, a powered chip, and a voltage feedback circuit, wherein the powered chip is connected to the power extraction port;
the voltage feedback circuit is separately connected to the power extraction port and the powered chip;

the powered chip is configured to extract electric power from power sourcing equipment by using the power extraction port, and the power extraction port is connected to the power sourcing equipment by using a cable; and
the voltage feedback circuit is configured to: obtain an input voltage of the powered chip, and send a feedback voltage corresponding to the input voltage to the power sourcing equipment, so that the power sourcing equipment adjusts, based on the feedback voltage, a power sourcing voltage that is output by the power sourcing equipment until the input voltage of the powered chip is a maximum voltage.

7. The powered device according to claim 6, wherein the voltage feedback circuit is connected to an input point of the powered chip to obtain the input voltage.

8. The powered device according to claim 6 or 7, wherein the voltage feedback circuit is specifically configured to output the feedback voltage to an idle wire pair of the cable, and transmit the feedback voltage to the power sourcing equipment.

9. The powered device according to any one of claims 6 to 8, wherein the feedback voltage corresponds to the input voltage based on a voltage correspondence, and the voltage correspondence comprises a proportional relationship or a functional relationship.

10. An energy-saving power sourcing method, comprising:

outputting, by power sourcing equipment, a power sourcing voltage to a power sourcing port of the power sourcing equipment, so as to supply power to a powered device, wherein the powered device is connected to the power sourcing port;
obtaining, by the power sourcing equipment, an input voltage of the powered device; and
adjusting, by the power sourcing equipment based on the input voltage, a power sourcing voltage that is output by the power sourcing equipment to the power sourcing port until the input voltage of the powered device is a maximum voltage.

11. The method according to claim 10, wherein
the obtaining, by the power sourcing equipment, an input voltage of the powered device comprises:

obtaining, by the power sourcing equipment, a feedback voltage from an idle wire pair, wherein the feedback voltage corresponds to the input voltage based on a voltage correspondence, and the idle wire pair is a wire pair that is in a cable used to connect the powered device and the power sourcing equipment and that is not used for power supply; and
the adjusting, by the power sourcing equipment based on the input voltage, a power sourcing voltage that is output by the power sourcing equipment comprises:

comparing, by the power sourcing equipment, the feedback voltage with a reference voltage to obtain a comparison result; and
adjusting, based on the comparison result and according to a preset adjustment policy, the power sourcing voltage that is output to the power sourcing port.

12. The method according to claim 11, wherein the comparing, by the power sourcing equipment, the feedback voltage with a reference voltage comprises:

converting the feedback voltage back into the input voltage based on the voltage correspondence, and comparing the input voltage with the reference voltage, wherein the reference voltage is the maximum voltage; or
comparing the feedback voltage with the reference voltage, wherein the reference voltage corresponds to the maximum voltage based on the voltage correspondence.

13. The method according to claim 10, wherein
the obtaining, by the power sourcing equipment, an input voltage of the powered device comprises:

receiving, by the power sourcing equipment, a link layer packet sent by the powered device, wherein the link layer packet comprises the input voltage; and obtaining the input voltage from the link layer packet; and
the adjusting, by the power sourcing equipment based on the input voltage, a power sourcing voltage that is output by the power sourcing equipment to the power sourcing port comprises:

comparing the input voltage with the maximum voltage to obtain a comparison result; and
adjusting an output power sourcing voltage based on the comparison result and according to a preset adjustment policy.

14. The method according to any one of claims 11 to 13, wherein the comparison result comprises a voltage difference, and the voltage difference is a difference between the maximum voltage and the input voltage; and
the preset adjustment policy is:

determining a voltage adjustment value based on the voltage difference, and gradually adjusting a power sourcing voltage that is output by the power sourcing equipment to the power sourcing port; or
calculating, based on the voltage difference, a target power sourcing voltage of the power sourcing equipment when the input voltage of the powered device is the maximum voltage; and adjusting, based on the target power sourcing voltage, the power sourcing voltage that is output by the power sourcing equipment to the power sourcing port.

15. The method according to claim 10, wherein
the obtaining, by the power sourcing equipment, an input voltage of the powered device comprises:

receiving, by the power sourcing equipment, a link layer packet sent by the powered device, wherein the link layer packet comprises the input voltage; and obtaining the input voltage from the link layer packet; and
the adjusting, by the power sourcing equipment based on the input voltage, a power sourcing voltage that is output by the power sourcing equipment to the power sourcing port comprises:

determining a target power sourcing voltage based on the input voltage; and
adjusting the power sourcing voltage that is output by the power sourcing equipment to the target power sourcing voltage.

16. A voltage feedback apparatus, comprising:

an obtaining module, configured to obtain an input voltage of a powered device; and
a feedback module, configured to feed back the input voltage to power sourcing equipment, so that the power sourcing equipment adjusts, based on the input voltage, an output power sourcing voltage until the input voltage of the powered device is a maximum voltage.

17. The voltage feedback apparatus according to claim 16, wherein
the feedback module is configured to output a feedback voltage corresponding to the input voltage to an idle wire pair, and transmit the feedback voltage to the power sourcing equipment, wherein the idle wire pair is a wire pair that is in a cable used to connect the powered device and the power sourcing equipment and that is not used for power supply, and the feedback voltage corresponds to the input voltage based on a voltage correspondence.

18. The voltage feedback apparatus according to claim 16, wherein
the feedback module is configured to: place the input voltage into a link layer packet, and send the link layer packet to the power sourcing equipment.

19. An energy-saving power sourcing apparatus, comprising:
an obtaining module, configured to obtain an input voltage of a powered device; and an adjustment module, configured to adjust, based on the input voltage, a power sourcing voltage that is output by power sourcing equipment until the input voltage of the powered device is a maximum voltage.

20. The energy-saving power sourcing apparatus according to claim 19, wherein
the obtaining module is configured to obtain a feedback voltage from an idle wire pair, wherein the feedback voltage corresponds to the input voltage based on a voltage correspondence, and the idle wire pair is a wire pair that is in a cable used to connect the powered device and the power sourcing equipment and that is not used for power supply; and
the adjustment module is configured to: compare the feedback voltage with a reference voltage to obtain a comparison result, and adjust, based on the comparison result and according to a preset adjustment policy, the power sourcing voltage that is output to a power sourcing port.

21. The energy-saving power sourcing apparatus according to claim 19, wherein the obtaining module is configured to: receive a link layer packet sent by the powered device, wherein the link layer packet comprises the input voltage; and obtain the input voltage from the link layer packet; and

the adjustment module is configured to: compare the input voltage with the maximum voltage to obtain a comparison result, and adjust an output power sourcing voltage based on the comparison result and according to a preset adjustment policy; or determine a target power sourcing voltage based on the input voltage, and adjust the power sourcing voltage that is output by the power sourcing equipment to the target power sourcing voltage.

Power supply system 10

| Power sourcing equipment 11 | Power sourcing port 110 | Network 30 / Cable 40 | Power extraction port 210 | Powered device 21 |

FIG. 1

FIG. 2

Rectifier bridge 204

D12'

1-2 wire pair

D12

D36'

3-6 wire pair

D36

Input
point     +

Powered
chip 203

−

D45'

4-5 wire pair

D45

D78'

7-8 wire pair

Power
extraction port
201

D78

FIG. 3

**Power sourcing equipment 100**

Power sourcing port 101

+ (53 V)

Power sourcing chip 103

− (Ground)

1-2 wire pair

3-6 wire pair

4-5 wire pair

7-8 wire pair

Voltage comparison circuit 102

Network 300

Cable 400

**Powered device 200**

Power extraction port 201

Input point

1-2 wire pair

3-6 wire pair

4-5 wire pair

7-8 wire pair

Rectifier bridge 204

+

−

Powered chip 203

Voltage feedback circuit 202

FIG. 4

Rectifier bridge 204 and voltage feedback circuit 202

R1  R2

M12

D12

1-2 wire pair

R3  R4

M36

D36

3-6 wire pair

Input point

Powered chip 203

+

−

R5  R6

M45

D45

4-5 wire pair

R1  R2

M78

D78

7-8 wire pair

Power extraction port 201

FIG. 5

FIG. 6

| Power sourcing equipment 100 outputs a power sourcing voltage to a power sourcing port 103 of the power sourcing equipment 100, so as to supply power to a powered device 200 | 701 |

| The powered device 200 feeds back an input voltage of the powered device 200 to the power sourcing equipment 100 | 702 |

| The power sourcing equipment 100 adjusts an output power sourcing voltage based on the input voltage of the powered device 200 until the input voltage of the powered device 200 is a maximum voltage | 703 |

FIG. 7

Voltage feedback apparatus 800

Obtaining module 801

Feedback module 802

FIG. 8

Energy-saving power sourcing apparatus 900

Obtaining module 801

Adjustment module 902

FIG. 9

## INTERNATIONAL SEARCH REPORT

| International application No. |
| --- |
| **PCT/CN2018/095536** |

**A. CLASSIFICATION OF SUBJECT MATTER**

H04L 12/10(2006.01)i; G05F 1/56(2006.01)i

According to International Patent Classification (IPC) or to both national classification and IPC

**B. FIELDS SEARCHED**

Minimum documentation searched (classification system followed by classification symbols)

H04L12; G06F1; G05F1

Documentation searched other than minimum documentation to the extent that such documents are included in the fields searched

Electronic data base consulted during the international search (name of data base and, where practicable, search terms used)

CNABS; CNTXT: 以太网, 比较, 电压, 反馈, 供电, 受电, 最大, 最高, 调节, 调整 WOTXT; EPTXT, USTXT, VEN: feedback+, poe, power over ethernet, Power Supply Equipment, PSE, Power Sourc+ Equipment, Power+ Device, PD, maximum, voltage?, max, maximal, compar+, volt

**C. DOCUMENTS CONSIDERED TO BE RELEVANT**

| Category* | Citation of document, with indication, where appropriate, of the relevant passages | Relevant to claim No. |
| --- | --- | --- |
| X | CN 104618122 A (ZTE CORPORATION) 13 May 2015 (2015-05-13) description, paragraphs 41-124, and figures 2-7 | 1-21 |
| X | CN 103595543 A (CHINA TELECOM CORPORATION LIMITED) 19 February 2014 (2014-02-19) description, paragraphs 28-55, and figures 2-8 | 1-21 |
| A | US 9377794 B1 (LINEAR TECHNOLOGY CORPORATION) 28 June 2016 (2016-06-28) entire document | 1-21 |
| A | US 2007/0263675 A1 (CISCO TECHNOLOGY, INC.) 15 November 2007 (2007-11-15) entire document | 1-21 |

☐ Further documents are listed in the continuation of Box C.　☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 September 2018** | **26 September 2018** |

| Name and mailing address of the ISA/CN | Authorized officer |
| --- | --- |
| **State Intellectual Property Office of the P. R. China** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/095536**

| Patent document cited in search report | | | Publication date (day/month/year) | Patent family member(s) | | | Publication date (day/month/year) |
|---|---|---|---|---|---|---|---|
| CN | 104618122 | A | 13 May 2015 | WO | 2014180442 | A1 | 13 November 2014 |
| CN | 103595543 | A | 19 February 2014 | CN | 103595543 | B | 13 February 2018 |
| US | 9377794 | B1 | 28 June 2016 | US | 9535437 | B1 | 03 January 2017 |
| | | | | US | 9547318 | B1 | 17 January 2017 |
| | | | | US | 9488997 | B1 | 08 November 2016 |
| US | 2007/0263675 | A1 | 15 November 2007 | EP | 2008191 | A2 | 31 December 2008 |
| | | | | US | 7490251 | B2 | 10 February 2009 |
| | | | | WO | 2007121150 | A3 | 09 October 2008 |
| | | | | WO | 2007121150 | A2 | 25 October 2007 |
| | | | | EP | 2008191 | B1 | 18 January 2017 |

Form PCT/ISA/210 (patent family annex) (January 2015)